# EUROPÄISCHE PATENTSCHRIFT

(11) **EP 0 991 879 B1**
(45) Veröffentlichungstag und Bekanntmachung des Hinweises auf die Patenterteilung: **21.01.2004**
(21) Anmeldenummer: 98936344.5
(22) Anmeldetag: 15.06.1998
(51) Int. Cl.: F16H 59/04, F16H 63/18, B60K 20/02, G05G 3/00, F16H 53/08

(54) **SCHALTWALZE FÜR EIN ZAHNRÄDERWECHSELGETRIEBE**
GEAR SHIFTING DRUM FOR A VARIABLE-SPEED GEARBOX
TAMBOUR SELECTEUR DE VITESSES POUR UNE BOITE DE VITESSES

(30) Priorität: 28.06.1997 DE 19727569
(43) Veröffentlichungstag der Anmeldung: 12.04.2000
(73) Patentinhaber: INA-Schaeffler KG, 91074 Herzogenaurach (DE)
(72) Erfinder: DÖPPLING, Horst, D-91074 Herzogenaurach (DE); STEINBERGER, Wolfgang, D-91074 Herzogenaurach (DE); WINKLER, Manfred, D-91086 Aurachtal (DE)
(86) Internationale Anmeldenummer: PCT/EP1998/003597
(87) Internationale Veröffentlichungsnummer: WO 1999/000614

(56) Entgegenhaltungen:
- WO-A1-96/30675
- DE-A1- 19 713 423
- JP-A- 6 026 857
- JP-A- 62 220 762

## Beschreibung

### Gebiet der Erfindung

Die Erfindung betrifft eine Schaltwalze für eine Schaltvorrichtung von Zahnräderwechselgetrieben für Kraftfahrzeuge, wobei eine Mantelfläche der zylindrisch gestalteten Schaltwalze zumindest eine Kurvenbahn aufweist, in der ein Mitnehmer einer Schaltgabel formschlüssig geführt ist, wobei die Schaltgabel mit einer Schaltmuffe einer Synchronisiereinrichtung verbunden ist, die auf einer parallel zur Schaltwalze angeordneten Getriebewelle zwischen zwei Zahnrädern axial verschiebbar angeordnet ist.

Eine Schaltvorrichtung, die eine Schaltwalze in der zuvor genannten Bauart aufweist, ist der Zeitschrift "auto motor und sport" Ausgabe 7/1995 auf den Seiten 98 bis 100 zu entnehmen. Die Schaltwalze ist anstelle einer üblichen H-Schaltung einzusetzen, wobei im Unterschied zur herkömmlichen Schaltung die einzelnen Schaltstufen, d. h. die Gänge sequenziell in einer Reihe bzw. einer Ebene geschaltet werden. Der Schalthebel kehrt nach Einlegen eines Gangs in seine Ausgangsposition zurück, von der aus er für die Schaltung eines nächsten Ganges bereitsteht. Dabei bietet es sich an, eine rückwärts gerichtete Bewegung des Schalthebels als Hochschalten und eine von der Ausgangsstellung nach vorn gerichtete Bewegung des Schalthebels für ein Herunterschalten vorzusehen. Die mit einer Schaltwalze versehene Getriebeschaltung verhindert ein Überspringen von Gängen, da von dem jeweils eingelegten Gang zunächst immer der benachbarte, d. h. der nächsthöhere oder nächstniedrigere Gang eingelegt werden kann. Als Übertragungsmittel der vom Schalthebel ausgelösten Bewegung auf die Drehbewegung der Schaltwalze, zur Erreichung eines Gangwechsels ist ein elektrischer Stellmotor vorgesehen, der die vom Schalthebel ausgelösten Schaltimpulse umsetzt in eine definierte Drehbewegung der Schaltwalze. Aufgrund der formschlüssig in die Kurvenbahn der Schaltwalze eingreifenden Schaltgabel löst eine Verdrehung der Schaltwalze eine Axialverschiebung der Schaltgabel aus, die mit einer Schaltmuffe der Synchronisiereinrichtung verbunden ist. Die bekannte Schaltwalze umfaßt einen zylindrischen Grundkörper in dessen Mantelfläche eine Kurvenbahn eingebracht ist. Die aus dem Stand der Technik bekannte Schaltwalze ist aus einem Vollmaterial durch ein spanende Fertigung, insbesondere mittels Kopierfräsmaschinen hergestellt. Eine derartige Schaltwalze erfordert einen hohen Fertigungsaufwand, verursacht hohe Herstellkosten und besitzt ein relativ hohes Eigengewicht, was der Forderung nach einem Leichtbau entgegensteht.

Das Dokument WO-A1 96/30675 zeigt eine mehrere Bauteile umfassende Schaltwalze nach dem Oberbegriff des Anspruchs 1 und 2. Ein Aufbau umfasst als Spritzgussteil gestaltete topfförmige Einzelteile, die an einer Schnittstelle, über sogenannte Anlegestellen zusammengefügt sind. Jedes Einzelteil ist einstückig mit einem radial nach innen versetzt angeordneten Rohrstück versehen, zur Aufnahme einer Achse. Zur Bildung von Schaltnuten, sind die Einzelelemente partiell mit radial nach außen gerichteten, kurvenartig verlaufenden Wandungen bzw. Borden versehen, die einstückig mit den Einzelelementen verbunden sind.

### Aufgabe der Erfindung

Durch die Erfindung soll gegenüber dem Stand der Technik eine Schaltwalze mit einer kostengünstig herstellbaren Kurvenbahn und einem Gewichtsvorteil geschaffen werden.

### Zusammenfassung der Erfindung

Diese Aufgabe wird durch die Erfindungen gemäß den Ansprüchen 1 und 2 gelöst.

Die Erfindung nach dem Patentanspruch 1 bezieht sich auf eine Schaltwalze, die einen aus Stahlblech hergestellten, als Grundkörper bezeichneten, einteilig rohrförmigen Hohlzylinder umfasst. Zur Bildung einer Kurvenbahn ist die Mantelfläche des Hohlzylinders zumindest mit einer radial nach außen gerichteten, als ein separates Bauteil gestalteten Wandung versehen, die eine Kurvenbahn bildet. Zur Darstellung der Wandung eignet sich insbesondere ein Blechstreifen, der den rohrförmigen Hohlzylinder umschließt und beispielsweise durch eine Schweißung oder Lötung unlösbar mit dem Hohlzylinder verbunden ist. Umfangsseitig ist die Wandung zur Darstellung einer Kurvenbahn profiliert ausgeführt. In der Einbaulage der Schaltwalze steht die Wandung formschlüssig mit der Schaltgabel bzw. einem Mitnehmer in einer Wirkverbindung.

Die Erfindung nach Anspruch 2 bezieht sich auf eine zweistufige Bauweise des zylindrischen Körpers der Schaltwalze. Dazu wird der Grundkörper von einer separaten, hohlzylindrischen Hülse koaxial umschlossen. Die nach der Montage unlösbar mit dem Grundkörper verbundene zylindrische Hülse weist auf der Mantelfäche zumindest eine Kurvenbahn auf, in die bzw. an der ein Mitnehmer oder eine Schaltgabel formschlüssig geführt ist. Der erfindungsgemäße Aufbau ermöglicht weiterhin den Grundkörper sowie die zylindrische Hülse aus unterschiedlichen Werkstoffen herzustellen. Zur Gewichtsoptimierung bietet es sich an, den Grundkörper aus Kunststoff oder Leichtmetall herzustellen und die dazu angepasste Hülse zur Erzielung einer ausreichenden Festigkeit und Verschleißeigenschaft spanlos aus Stahlblech zu formen. Zur unlösbaren Befestigung des Grundkörpers mit der zylindrischen Hülse eignet sich bevorzugt eine Verklebung oder ein geeignetes anderes Verfahren, mit dem diese Bauteile unlösbar verbunden werden.

Beiden Erfindungen gemeinsam ist ein Schaltwalzenkonzept zu deren Herstellung im Vergleich zu bisherigen Lösungen der erforderliche Bearbeitungsaufwand deutlich verringert werden kann. Für die Erfindung nach Anspruch 1 entfällt zur Darstellung der Kurvenbahnen jegliche spanende Bearbeitung. Die Erfindung gemäß Anspruch 2 reduziert ebenfalls den erforderlichen spanenden Fertigungsaufwand zur Herstellung der Kurvenbahn im Vergleich zum bisher bekannten Stand der Technik.

Weitere Ausgestaltungen der Erfindung sind Gegenstand der abhängigen Ansprüche 3 bis 11.

In einer Ausgestaltung der Erfindung nach Anspruch 1 umfaßt die Schaltwalze zur Bildung einer Kurvenbahn jeweils zwei beabstandete Wandungen, zwischen denen der Mitnehmer der Schaltgabel geführt ist. Als eine alternative, bauteiloptimierte Lösung schließt die Erfindung eine Kurvenbahn ein, die aus einer Wandung besteht, an der mittels eines gabelförmig gestalteten Ansatzes der Mitnehmer bzw. die Schaltgabel geführt ist.

Erfindungsgemäß ist als Schaltwalze ein zylindrisch gestalteter Grundkörper vorgesehen, auf dessen Mantelfläche jeweils paarweise beabstandet angeordnete, wellenförmig profilierte Lochscheiben unlösbar befestigt sind, wobei diese eine Kurvenbahn bildenden Scheiben umfangsseitig auf dem Grundkörper unlösbar befestigt sind. Alternativ zu Lochscheiben sind die Kurvenbahnen einer Schaltwalze mittels eines quadratischen oder rechteckförmigen Profilstrangs bzw. einen Rundprofils darstellbar, wobei jeweils zwei paarweise angeordnete Profile umfangsseitig auf der Mantelfläche des Grundkörpers angeordnet sind.

In einer bevorzugten Weise ist die Kurvenbahn der Schaltwalze weiterhin durch ein einteiliges, U-förmig gestaltetes Profil darstellbar, das dem Verlauf der Kurvenbahn entsprechend umfangsseitig auf der Mantelfläche des Grundkörpers oder der zylindrischen Hülse angebracht ist. Die Beabstandung der beiden Schenkel der U-Schiene ist dabei angepaßt an das erforderliche Breitenmaß der Schaltgabel bzw. des Mitnehmers. Diese den erforderlichen Fertigungsaufwand verringernde U-Schiene trägt außerdem zur Versteifung der Schaltwalze bei, die folglich gewichtsoptimiert mit einer reduzierten Wandstärke ausgeführt werden kann.

Zur Schaffung einer definierten Kurvenbahnlänge, sind die Wandungen der Schaltwalze in den Endzonen geschlossen gestaltet, d. h. zueinander nach innen geführt und bilden damit einen Endanschlag für den Mitnehmer der Schaltgabel.

Zur Herstellung des Schaltwalzen-Grundkörpers eignet sich vorzugsweise ein Rohrkörper aus Stahlblech, dessen Stirnseiten von Deckeln aus Stahlblech verschlossen sind. Zur Verbesserung der Eigensteifigkeit der Schaltwalze, der Lagefixierung sowie der Befestigung am Grundkörper sind die Deckel vorzugsweise topfförmig gestaltet.

In einer Weiterbildung der Erfindung sind die Deckel jeweils zentrisch mit einem axial vorstehenden Zapfen versehen, die eine drehbare Anordnung der Schaltwalze im Getriebegehäuse ermöglichen. Der Zapfen kann dabei einteilig mit dem Deckel ausgeführt sein oder als separates Bauteil unlösbar am Deckel befestigt werden.

Die Verdrehung der Schaltwalze in Abhängigkeit von der Bewegung des Schalthebels erfolgt vorzugsweise durch einen Stellmotor, der mittels einer Zahnradverbindung eine definierte exakte Verdrehung der Schaltwalze vornimmt. Dazu weist die Schaltwalze eine Außenverzahnung auf, in die ein Zahnrad des Stellmotors formschlüssig eingreift. Alternativ ist zur Übertragung einer Drehbewegung zwischen dem Stellmotor und der Schaltwalze ebenfalls eine Zahnstange einsetzbar. Als Außenverzahnung der Schaltwalze bietet es sich beispielsweise an, einen der stirnseitigen Deckel entsprechend zu gestalten. Alternativ eignet sich ein separater, mit einer Außenverzahnung versehener Ring, der die Schaltwalze umschließt.

Als Maßnahme zur Erreichung einer verbesserten Schaltgenauigkeit der Schaltwalze, steht diese erfindungsgemäß mit einer Rastiervorrichtung in Verbindung, die eine exakte Drehfixierung der Schaltwalze in Abhängigkeit des einzulegenden Ganges sicherstellt. Als Rastiervorrichtung eignet sich beispielsweise ein Deckel mit kalottenartig geformten Ausnehmungen bzw.

Prägungen, die mit einer im Getriebegehäuse lagepositionierten, federbelasteten Rastkugel zusammenwirken. Die Rastiervorrichtung kann weiterhin mit einem Schalter versehen werden, der eine Anzeige des aktuell eingelegten Ganges optisch anzeigt. Durch das Zusammenwirken einer speziell geformten, insbesondere vertieften Prägung, die der Rückwärtsgangstellung zugeordnet ist, und in die sich die Rastkugel der Rastiervorrichtung unter Ausübung eines vergrößerten Hubs verlagert. Diese spezielle dem Rückwärtsgang zugeordnete Rastierung kann in Verbindung mit einem Schalter zur Betätigung eines Rücklichtschalters für ein Fahrzeug genutzt werden.

### Kurze Beschreibung der Zeichnungen

Ausführungsbeispiele der Erfindung sind in den Zeichnungen dargestellt, die nachfolgend näher beschrieben sind. Es zeigen:
- Figur 1: in einem Längsschnitt eine erfindungsgemäße Schaltwalze im eingebauten Zustand;
- Figur 2: in einer Ansicht die Einzelteilzeichnung der in Figur 1 im Einbauzustand abgebildeten Schaltwalze;
- Figur 3: die Abwicklung einer Mantelfläche der in Figur 2 dargestellten Schaltwalze;
- Figur 4: eine Schaltwalze, die vergleichbar ist mit der in Figur 2 abgebildeten Schaltwalze, wobei die Kurvenbahn durch eine Wandung gebildet ist;
- Figur 5: die Abwicklung der Mantelfläche von der in Figur 4 abgebildeten Schaltstange;
- Figur 6: einen Ausschnitt einer Schaltwalze mit einer zu Figur 2 abweichenden Kurvenbahn;
- Figur 7: eine Querschnittsdarstellung einer Schaltwalze, die zweischalig gestaltet ist.

### Ausführliche Beschreibung der Zeichnungen

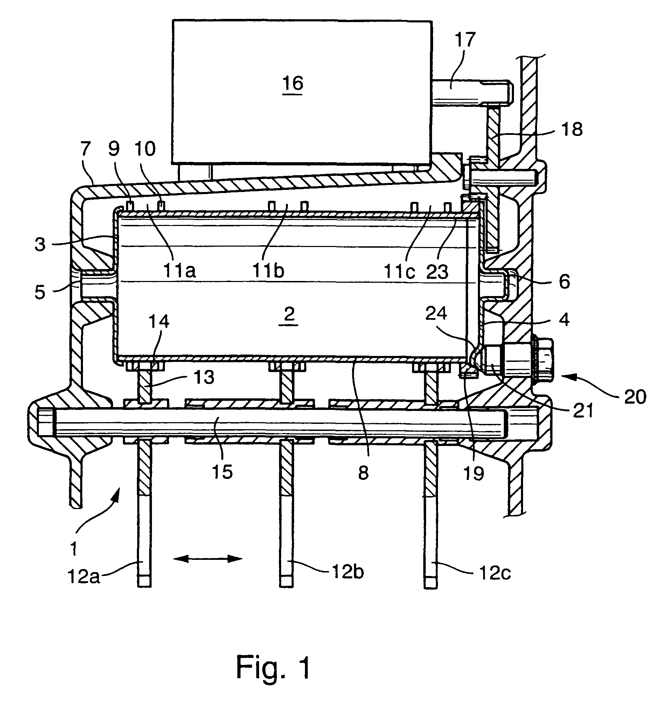

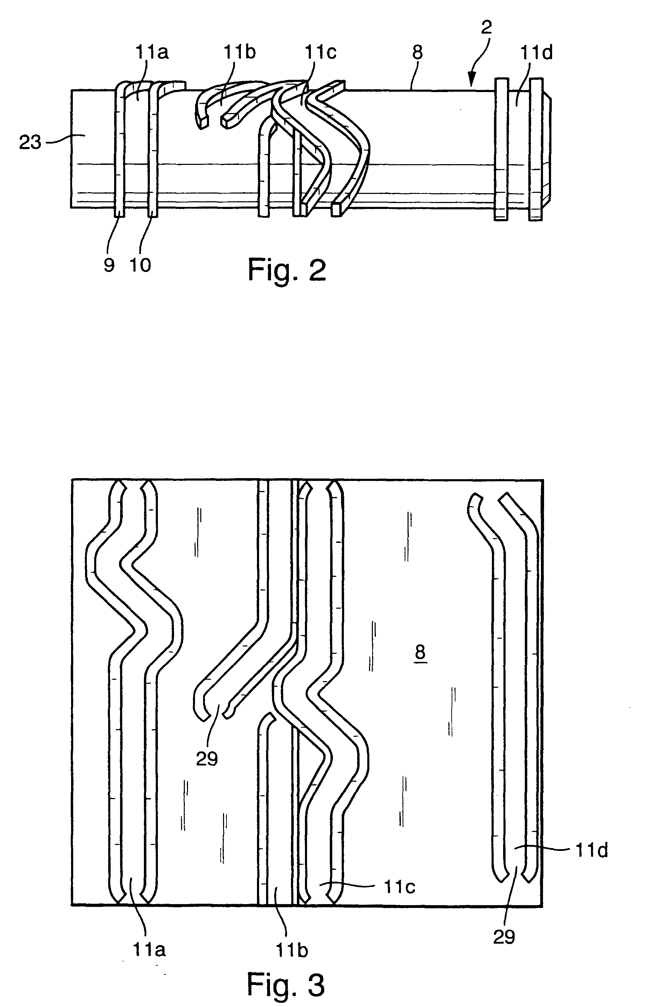

Aus der Figur 1 ist ein Ausschnitt einer Schaltung eines Zahnräderwechselgetriebes 1 im Längsschnitt abgebildet. Zur Schaltung ist eine hohlzylindrisch gestaltete Schaltwalze 2 vorgesehen, die an beiden Stirnseiten mit Deckeln 3, 4 verschlossen ist. Beiden Deckeln 3, 4 gemeinsam ist zentrisch ein axial vorstehender Ansatz 5, 6, über die eine Lagerung der Schaltwalze 2 in einem Gehäuse 7 des Zahnräderwechselgetriebes 1 erfolgt. Auf einer Mantelfläche 8 der Schaltwalze 2 sind zueinander axial beabstandete Wandungen 9, 10 angeordnet, die weitestgehend die Schaltwalze 2 umschließen. Die Wandungen 9, 10 sind umfangsseitig wellenförmig gestaltet und bilden eine Kurvenbahn 11a (siehe auch Figur 2). Die Schaltwalze 2 ist versehen mit drei versetzt zueinander angeordneten Kurvenbahnen 11a bis 11c, die auch als Schaltnuten bezeichnet werden. Jeder Kurvenbahn 11a bis 11c ist eine Schaltgabel 12a bis 12c zugeordnet, die jeweils über einen Mitnehmer 13 formschlüssig in die Kurvenbahn 11a bis 11c eingreifen. Als Maßnahme zur Verbesserung einer Mitnehmerführung, weisen diese endseitig jeweils ein Führungselement 14 auf, das formschlüssig zwischen den Wandungen 9, 10 geführt ist. Alle Schaltgabeln 12a bis 12c sind auf einer Schaltwelle 15 axial verschiebbar angeordnet, die achsparallel zur Schaltwalze 2 im Getriebegehäuse eingesetzt ist. Die Schaltgabel 12a bis 12c umgreifen mit ihrem gabelförmig gestalteten Enden eine in Figur 1 nicht abgebildete Schaltmuffe, die über eine Verzahnung axial auf einer Getriebewelle verschiebbar ist. Jede Schaltmuffe steht dabei mit einer Synchronisiereinrichtung in Verbindung. Ausgehend von einer Mittelstellung bzw. Neutralstellung der Schaltmuffe kann durch eine Axialverschiebung mit Hilfe der Schaltgabeln 12a bis 12c eine Gangschaltung erfolgen.

### Funktionsweise der Schaltwalze:

Für die Schaltung einzelner Gänge ist eine Axialverschiebung der Schaltgabeln 12a bis 12c (siehe Doppelpfeil) der Schaltgabeln 12a bis 12c erforderlich. Eine Schaltwalzendrehung bewirkt aufgrund der Führungsgeometrie der Kurvenbahnen 11a bis 11c, daß die darin formschlüssig über die Mitnehmer 13 geführten Schaltgabeln 12a bis 12c entsprechend der Kurvenbahn 11 a bis 11 c in beiden axialen Richtungen verschiebbar sind. Als Drehantrieb für die Schaltwalze 2 dient ein Stellmotor 16, der außen am Gehäuse 7 des Zahnradwechselgetriebes 1 angeordnet ist. Die endseitig verzahnte Ausgangswelle 17 des Stellmotors 16 ist zur Schaffung einer Antriebsuntersetzung mit einem relativ großen Zwischenrad 18 versehen, das weiterhin ein axial versetztes kleines Zahnrad aufweist, welches mit einem Zahnkranz 19 in Eingriff steht, der außenseitig den Deckel 4 der Schaltwalze 2 umschließt. Der reversibel, d. h. umsteuerbare Stellmotor 16 ermöglicht abhängig von einer Gangvorwahl, die beispielsweise mittels eines manuell betätigbaren Schalthebels erfolgt, eine gezielte Drehbewegung der Schaltwalze 2. Weiterhin stellt der Stellmotor 16 zur Vermeidung einer Überlastung der Synchronisiereinrichtung eine definierte Schaltgeschwindigkeit sicher. Zur Sicherstellung exakter Schaltpositionen ist der Schaltwalze 2 eine Rastiervorrichtung 20 zugeordnet. Dazu ist in der Wandung des Gehäuses 7 ein federbelasteter Rastkörper 21 vorgesehen, der zur Positionierung in Prägungen 24, d. h. stirnseitigen Ausnehmungen im Deckel 4 verrastet.

In Figur 2 ist die Schaltwalze 2 in einer Ansicht abgebildet. Aus dieser Darstellung wird der wellenförmige Verlauf von unterschiedlich gestalteten Kurvenbahnen 11a bis 11 d sichtbar. Zur Schaffung einer kostengünstigen Schaltwalze 2 umfaßt diese einen zylindrischen Grundkörper 23, auf dem Wandungen 9, 10 zueinander axial beabstandet, zur Bildung einer gewünschten Kurvenbahn 11a bis 11 d umfangsseitig wellenförmig angeordnet sind. Als Wandungen 9, 10 können beispielsweise quadratische oder rechteckförmig gestaltete Endlosprofile verwendet werden, die entsprechend abgelängt und wellenförmig profiliert auf der Mantelfläche 8 befestigt werden.

Die Abwicklung der Mantelfläche 8 der Schaltwalze 2 gemäß Figur 2 zeigt die Figur 3. Dabei werden die endseitig in Endzonen 29 weitestgehend geschlossenen Kurvenbahnen 11a bis 11d deutlich, deren Wandungen zueinander nach innen zeigend geformt sind. Diese Endzonen 29 bilden einen Endanschlag für die in den Kurvenbahnen 11a bis 11 d geführten Mitnehmer 13.

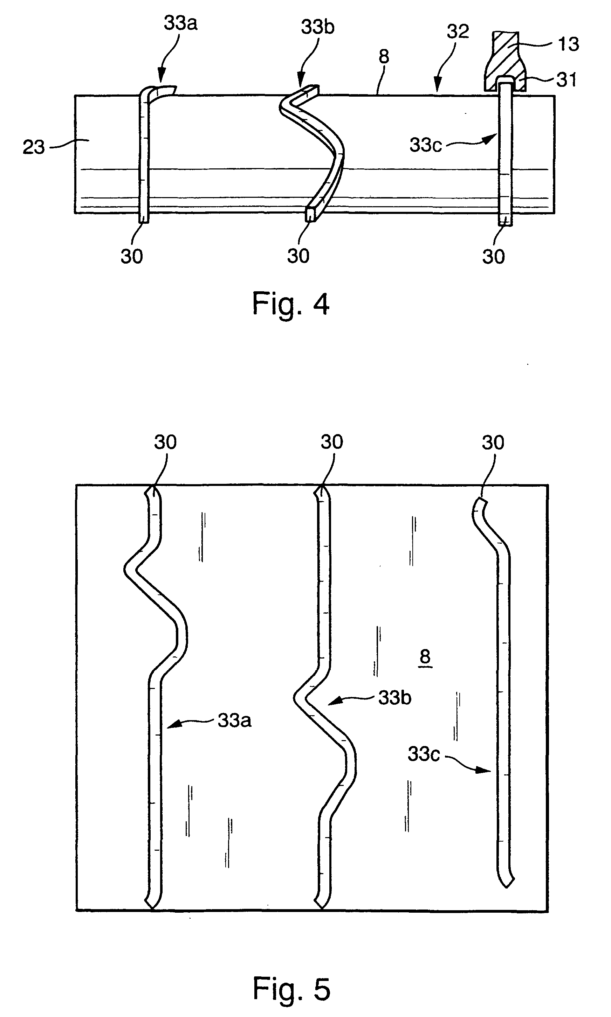

In den Figuren 4 und 5 ist die Schaltwalze 32 abgebildet, die eine Alternative zu der in Figur 2 abgebildeten Schaltwalze 2 darstellt. Die Kurvenbahnen 33a bis 33c werden dabei jeweils von nur einer Wandung 30 gebildet, vorzugsweise durch einen Profilstrang mit einem quadratischen oder rechteckförmigen Querschnitt. Zur Führung der Mitnehmer 13 sind diese endseitig mit einem gabelförmigen Ansatz 31 versehen, der die Wandung 30 umgreift. Damit ergibt sich eine bauteiloptimierte und gewichtsreduzierte Mitnehmerführung.

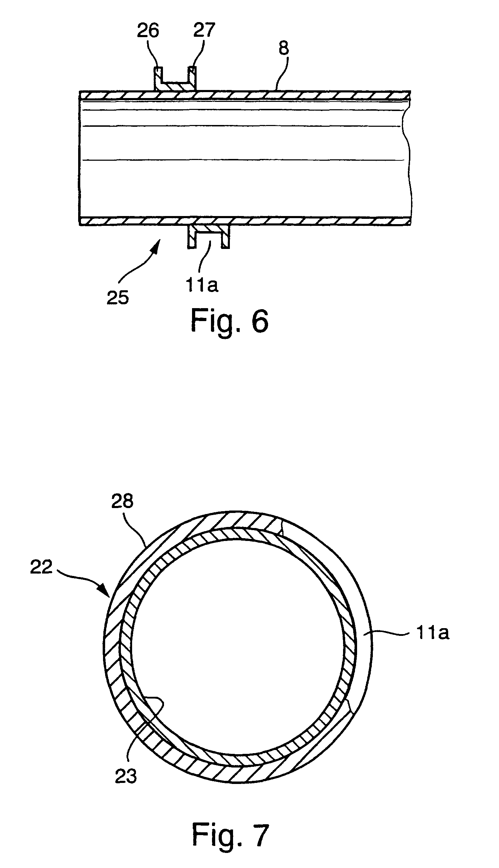

In Figur 6 ist eine alternativ gestaltete Kurvenbahn 11 a dargestellt, die gebildet wird durch ein U-förmiges Profil 25, welches wellenförmig auf der Mantelfläche 8 der Schaltwalze 2 angeordnet ist. Der Mitnehmer 13 der Schaltgabel 12a bis 12c (siehe Figur 1) ist dabei an Wandungen 26, 27 des Profils 25 geführt, deren Beabstandung an den Durchmesser des Führungselementes 14 angepaßt ist.

In Figur 7 ist die in einer zweischaligen Bauweise gestaltete Schaltwalze 22 abgebildet. Der Grundkörper 23 ist demnach von einer zylindrischen Hülse 28 umschlossen, in die die Kurvenbahn 11a eingebracht ist. Dieser Aufbau ermöglicht die Vorfertigung einer Hülse 28, die mit allen erforderlichen Kurvenbahnen 11 a bis 11 d versehen ist. Weiterhin bietet dieser Aufbau für einen Getriebehersteller, der unterschiedliche Schaltwalzen benötigt, eine Kostenreduzierung und eine Erhöhung von Gleichteilen, da Grundkörper 23 gleicher Bauart verwendbar sind, die mit unterschiedlichen Hülsen 28 kombinierbar sind. Zur Gewichtsoptimierung oder Geräuschdämpfung ermöglicht diese Bauweise die Verwendung unterschiedlicher Materialien für die Hülse 28 und den Grundkörper 23. Danach bietet es sich an, die Hülse aus Stahlblech zu fertigen, die unlösbar auf einem aus Kunststoff hergestellten Grundkörper angeordnet ist. Eine solche Werkstoffpaarung nimmt einen positiven Einfluß auf die Geräuschentwicklung der mit der Schaltwalze 22 in Verbindung stehenden Bauteile.

### Bezugszahlenliste

- 1: Zahnradwechselgetriebe
- 2: Schaltwalze
- 3: Deckel
- 4: Deckel
- 5: Ansatz
- 6: Ansatz
- 7: Gehäuse
- 8: Mantelfläche
- 9: Wandung
- 10: Wandung
- 11a: Kurvenbahn
- 11b: Kurvenbahn
- 11c: Kurvenbahn
- 11d: Kurvenbahn
- 12a: Schaltgabel
- 12b: Schaltgabel
- 12c: Schaltgabel
- 13: Mitnehmer
- 14: Führungselement
- 15: Schaltwelle
- 16: Stellmotor
- 17: Ausgangswelle
- 18: Zwischenrad
- 19: Zahnkranz
- 20: Rastiervorrichtung
- 21: Rastkörper
- 22: Schaltwalze
- 23: Grundkörper
- 24: Prägung
- 25: Profil
- 26: Wandung
- 27: Wandung
- 28: Hülse
- 29: Endzone
- 30: Wandung
- 31: Ansatz
- 32: Schaltwalze
- 33a: Kurvenbahn
- 33b: Kurvenbahn
- 33c: Kurvenbahn

## Patentansprüche

1. Schaltwalze für eine Schaltvorrichtung von einem Zahnräderwechselgetriebe (1) für Kraftfahrzeuge, wobei eine Mantelfläche (8) der zylindrisch gestalteten Schaltwalze (2, 22) zumindest eine Kurvenbahn (11a bis 11d) aufweist, zur formschlüssigen Führung eines Mitnehmers (13) einer Schaltgabel (12a bis 12c), wobei die Schaltgabel (12a bis 12c) mit einer Schaltmuffe einer Synchronisiereinrichtung verbunden ist, die auf einer parallel zur Schaltwalze (2, 22) angeordneten Getriebewelle zwischen zwei Zahnrädern axial verschiebbar angeordnet ist, **dadurch gekennzeichnet, dass** die Schaltwalze (2) einen aus Stahlblech hergestellten als Grundkörper (23) bezeichneten einteilig rohrförmigen Hohlzylinder umfasst, auf dessen Mantelfläche (8) zur Bildung der Kurvenbahn (11a bis 11d; 33a bis 33c) zumindest eine radial nach außen gerichtete, als ein separates Bauteil gestaltete Wandung (9, 10, 26, 27, 30) angeordnet ist.

2. Schaltwalze gemäß Oberbegriff von Anspruch 1, **gekennzeichnet durch** eine zweistufige Bauweise der Schaltwalze (22), die einen Grundkörper (23) umfasst, der von einer separaten zumindest eine Kurvenbahnen (11a bis 11c) aufweisenden hohlzylindrischen Hülse (28) koaxial umschlossen ist, die in einer Endlage unlösbar mit dem Grundkörper (23) verbunden ist, wobei die Schaltwalze (22) und die Hülse (28) aus unterschiedlichen Werkstoffen hergestellt sind

3. Schaltwalze nach Anspruch 1, **dadurch gekennzeichnet, dass** die Kurvenbahn (11a bis 11d) zwei beabstandete Wandungen (9, 10; 26, 27) umfasst.

4. Schaltwalze nach Anspruch 1, **dadurch gekennzeichnet, dass** die Kurvenbahn (33a bis 33c) von einer Wandung (30) gebildet wird, die ein gabelförmiger Ansatz (31) des Mitnehmers (13) umgreift.

5. Schaltwalze nach Anspruch 1, **dadurch gekennzeichnet, dass** als Kurvenbahn wellenförmig profilierte Lochscheiben vorgesehen sind, die vorgefertigt in einer der Kurvenbahn (11a bis 11d) entsprechenden Formgebung paarweise auf dem zylindrischen Grundkörper (23) angeordnet sind.

6. Schaltwalze nach Anspruch 1, **dadurch gekennzeichnet, dass** ein quadratisches oder rechteckförmiges Vierkantprofil oder ein Rundprofil zur Bildung der Kurvenbahn (11a bis 11d) paarweise auf dem Grundkörper (23) befestigt ist.

7. Schaltwalze nach Anspruch 1, **dadurch gekennzeichnet, dass** ein einteilig U-förmiges Profil (25) zur Bildung der Kurvenbahn (11a bis 11d) dient, das in einer entsprechenden zylindrischen Formgebung vorgefertigt auf der Mantelfläche (8) befestigt ist.

8. Schaltwalze nach Anspruch 1, **dadurch gekennzeichnet, dass** die Kurvenbahn (11a bis 11d) in Endzonen (29) weitestgehend geschlossen gestaltet sind.

9. Schaltwalze nach Anspruch 1 oder Anspruch 2, **dadurch gekennzeichnet, dass** als Grundkörper (23) an den Stirnseiten mittels aus Stahlblech hergestellten Deckeln (3, 4) verschlossen ist.

10. Schaltwalze nach Anspruch 9, **dadurch gekennzeichnet, dass** an den Deckeln (3, 4) zentrisch axial vorstehende Zapfen angeordnet sind, die im eingebauten Zustand als Lagerung der Schaltwalze (2) in einem Gehäuse (7) des Zahnräderwechselgetriebes (1) dienen.

11. Schaltwalze nach Anspruch 1, **dadurch gekennzeichnet, dass** der Schaltwalze (2) ein mit einer Außenverzahnung versehener Zahnkranz (19) zugeordnet ist, der in einer Einbaulage der Schaltwalze (2), zur Schaffung eines Drehantriebs, über ein Zwischenrad (18) mit einem Stellmotor (16) in Verbindung steht.

## Claims

1. Gear-shifting drum for a gear-shifting device of a variable - speed transmission (1) for motor vehicles, an outer surface area (8) of the cylindrically configured gear-shifting drum (2, 22) has at least one curved track (11a to 11d) for the positive guidance of a driver (13) of a shift fork (12a to 12c), the shift fork (12a to 12c) being connected to a shift sleeve of a synchronization device which is arranged axially displaceably between two gearwheels on a transmission shaft arranged parallel to the gear-shifting drum (2, 22), **characterized in that** the gear-shifting drum (2) comprises a one-part tubular hollow cylinder which is produced from sheet steel and is designated as a basic body (23) and on the outer surface area (8) of which is arranged, to form the curved track (11a to 11d; 33a to 33c), at least one radially outward-directed wall (9, 10, 26, 27, 30) configured as a separate component.

2. Gear-shifting drum according to the precharacterizing clause of Claim 1, **characterized by** a two-stage form of construction of the gear-shifting drum (22), which comprises a basic body (23) which is coaxially surrounded by a separate hollow-cylindrical sleeve (28) which has at least one curved track (11a to 11c) and which is connected in an end position unreleasably to the basic body (23), the gear-shifting drum (22) and the sleeve (28) being produced from different materials.

3. Gear-shifting drum according to Claim 1, **characterized in that** the curved track (11a to 11d) comprises two spaced-apart walls (9, 10; 26, 27).

4. Gear-shifting drum according to Claim 1, **characterized in that** the curved track (33a to 33c) is formed by a wall (30), around which a fork-shaped extension (31) of the driver (13) engages .

5. Gear-shifting drum according to Claim 1, **characterized in that** perforated discs profiled in a wave-shaped manner are provided as a curved track, which, prefabricated in a shape corresponding to the curved track (11a to 11d), are arranged in pairs on the cylindrical basic body (23).

6. Gear-shifting drum according to Claim 1, **characterized in that** a square or rectangular quadrangular profile or a round profile is fastened in pairs on the basic body (23) in order to form the curved track (11a to 11d).

7. Gear-shifting drum according to Claim 1, **characterized in that** a one-part U-shaped profile (25) serves for forming the curved track (11a to 11d) and, prefabricated in a corresponding cylindrical shape, is fastened on the outer surface area (8).

8. Gear-shifting drum according to Claim 1, **characterized in that** the curved tracks (11a to 11d) have as far as possible a closed configuration in end zones (29).

9. Gear-shifting drum according to Claim 1 or Claim 2, **characterized in that** the basic body (23) is closed on the end faces by means of covers (3, 4) produced from sheet steel.

10. Gear-shifting drum according to Claim 9, **characterized in that** the covers (3, 4) have arranged on them jewels which axially project centrally and, in the installed state, serve as a mounting for the gear-shifting drum (2) in a housing (7) of the variable-speed transmission (1).

11. Gear-shifting drum according to Claim 1, **characterized in that** the gear-shifting drum (2) is assigned a tooth ring (19) which is provided with an external toothing and which, in an installation position of the gear-shifting drum (2), is connected to a servomotor (16) via an intermediate wheel (18) in order to provide a rotary drive.

## Revendications

1. Tambour de sélection pour un dispositif de commande d'une boîte de changement de vitesses à engrenages (1) pour véhicules automobiles, où une surface latérale (8) du tambour de forme cylindrique (2, 22) présente au moins un chemin curviligne (11a à 11d) pour le guidage par liaison par forme d'un entraîneur (13) d'une fourchette de sélection (12a à 12c), la fourchette de sélection (12a à 12c) étant reliée à un manchon coulissant d'un synchroniseur qui est disposé sur un arbre de transmission placé parallèlement au tambour de sélection (2, 22) de manière à pouvoir coulisser entre deux roues dentées, **caractérisé en ce que** le tambour de sélection (2) comprend un cylindre creux de forme tubulaire en une pièce, appelé corps de base (23) et réalisé en tôle d'acier, sur la surface latérale (8) duquel au moins une paroi, réalisée en tant que composant distinct, et orientée vers l'extérieur radialement (9, 10, 26, 27, 30) a été disposée afin de former le chemin curviligne (11a à 11d ; 33a à 33c).

2. Tambour de sélection selon le préambule de la revendication 1, **caractérisé par** un mode de construction en deux phases du tambour de sélection (22) qui comprend un corps de base (23) qui est entouré coaxialement par une douille en forme de cylindre creux (28) présentant au moins un chemin curviligne (11a à 11c), qui, dans une position finale, est assemblée de manière non démontable au corps de base (23), le tambour de sélection (22) et la douille (28) étant réalisés dans des matériaux différents.

3. Tambour de sélection selon la revendication 1, **caractérisé en ce que** le chemin curviligne (11a à 11d) comprend deux parois (9, 10 ; 26, 27) écartées l'une de l'autre.

4. Tambour de sélection selon la revendication 1, **caractérisé en ce que** le chemin curviligne (33a à 33c) est constitué d'une paroi (30) qui est entourée par un embout en forme de fourchette (31) de l'entraîneur (13).

5. Tambour de sélection selon la revendication 1, **caractérisé en ce que** des disques perforés profilés en forme d'onde sont prévus en tant que chemin curviligne, lesquels disques, préfabriqués selon une forme correspondant au chemin curviligne (11a à 11d), sont disposés, par paire, sur le corps de base cylindrique (23) .

6. Tambour de sélection selon la revendication 1, **caractérisé en ce qu'**un profilé à quatre pans de forme rectangulaire ou quadratique ou un profilé rond est fixé, par paire, sur le corps de base (23) afin de former le chemin curviligne (11a à 11d).

7. Tambour de sélection selon la revendication 1, **caractérisé en ce qu'**un profilé en une pièce en forme de U (25) sert à former le chemin curviligne (11a à 11d), lequel profilé préfabriqué selon une forme correspondante cylindrique, est fixé sur la surface latérale (8).

8. Tambour de sélection selon la revendication 1, **caractérisé en ce que** le chemin curviligne (11a à 11d) est réalisé de manière quasiment fermée dans ses zones terminales (29).

9. Tambour de sélection selon la revendication 1 ou la revendication 2, **caractérisé en ce qu'**il est fermé, en tant que corps de base (23), au moyen de couvercles (3, 4) fabriqués en tôle d'acier au niveau des faces frontales.

10. Tambour de sélection selon la revendication 9, **caractérisé en ce que** des tourillons débordant axialement au centre sont disposés sur les couvercles (3, 4), lesquels, en position de montage, servent de support au tambour de sélection (2) dans un carter (7) de la boîte de changement de vitesses à engrenages (1).

11. Tambour de sélection selon la revendication 1, **caractérisé en ce que** le tambour de sélection (2) est associé à une couronne dentée (19) pourvue d'une denture externe, laquelle est en liaison avec un servomoteur (16) via une roue intermédiaire (18) afin de procurer un dispositif d'entraînement rotatif quand le tambour de sélection (2) est en position de montage.
